# EUROPEAN PATENT APPLICATION

(11) **EP 4 283 380 A1**
(43) Date of publication of application: **29.11.2023**
(21) Application number: 22755841.8
(22) Date of filing: 24.01.2022
(51) Int. Cl.: G02B 27/02, G02B 26/08, G02B 26/10, H04N 5/64

(54) **EYEGLASS-TYPE VIDEO DISPLAY DEVICE**

(30) Priority: 22.02.2021 JP 2021026245
(71) Applicant: STANLEY ELECTRIC CO., LTD., Tokyo 153-8636 (JP)
(72) Inventor: SAKURAI Makoto, Tokyo 153-8636 (JP); TAKAO Yoshifumi, Tokyo 153-8636 (JP); NAKAZAWA Katsunori, Tokyo 153-8636 (JP); MATSUMARU Naoya, Tokyo 153-8636 (JP); YAMAMOTO Atsushi, Tokyo 153-8636 (JP); IDRIS Nazirul Afham, Tokyo 153-8636 (JP)
(74) Representative: Pritzlaff, Stefanie Lydia
(86) International application number: PCT/JP2022/002452
(87) International publication number: WO 2022/176517

(57) **Abstract**

An eyeglass-type video display device 55 includes a video generation device 10 and an eyeglass body 60. The video generation device 10 includes: an MEMS optical deflector 20 and a VCSEL 17 mounted on the same substrate 15; and a planar mirror 23 and a rotating mirror 25 arranged above the substrate 15. Light Lp emitted from an emission part 18 is emitted obliquely upward from one longitudinal-direction end side of the substrate 15 through the planar mirror 23, the rotating mirror 25, and a revolving mirror 21. The video generation device 10 is attached to an arm 61b of the eyeglass body 60 such that the emission direction of the light Lp becomes a direction that is obliquely forward with respect to an inner side surface of the arm 61b.

## Description

### Technical Field

The present invention relates to an eyeglass-type video display device that allows a user to view an image.

### Background Art

Patent Literature 1 discloses an image eyeglass-type video display device that allows a user to view an image. In the eyeglass-type video display device, an MEMS (micro electro mechanical systems) optical deflector and a laser light source are attached to an arm (temple) of a glass body. The light emitted from the laser source moves forward along the arm and is reflected by a revolving mirror of the MEMS optical deflector at the front end portion of the arm, scanning the inner surface of the lens of the front frame (rim) to generate images on the inner surface. There are two types of eyeglass-type video devices: one is to allow the user to view an image on a screen by using the inner surface of the lens of the eyeglasses as a screen, and the other is to generate the image directly on the retina of the user by using the inner surface of the lens of the eyeglasses as a mirror.

Patent Literature 2 discloses an optical scanning device that displays textual information on a camera viewfinder. The optical scanning device has a vertical cavity surface emitting LASER (VCSEL) and a micromirror arranged on the same substrate, and two glass bodies with reflective films that are arranged directly above the VCSEL and the micromirror to change the traveling direction of upward light emitted from the VCSEL to downward and then to direct the light to the micromirror. In this optical scanning device, the reflective film of the glass body with the reflective film above the micromirror is a half mirror, and the scanning light reflected by the micromirror travels straight and is emitted outside without being reflected by the reflective film.

### Citation List

### Patent Literature

Patent Literature 1: Japanese Patent Application Laid-Open No. 2009-244869
Patent Literature 2: Japanese Patent Application Laid-Open No. 2010-175677

### Summary of Invention

### Technical Problem

The eyeglass-type video device in Patent Literature 1 is built in an arm. Since glasses are a user's personal preference, it is difficult for the user to use the eyeglass-type video device with his/her favorite glasses. Even if the built-in eyeglass-type video device of Patent Literature 1 is separated from the arm and changed to an external type, the MEMS optical deflector micromirror at the front end portion of the arm needs to stand vertically, not parallel to the side of the arm, in order to irradiate the light coming along the arm to the lens in the front frame of the glass body, which makes the external-type eyeglass-type video display device thicker.

In the optical scanning device of Patent Literature 2, a VCSEL and a micromirror are mounted on the same substrate. When the optical scanning device is attached to the arm of the glass body as a device (video generation device) of an eyeglass-type video display device, however, the space between the arm and the user's face is narrow. Therefore, it is difficult to attach an optical element that changes the direction of light emitted perpendicularly to the arm from the device toward the lens on the rim of the glass body almost perpendicularly.

An object of the present invention is to provide an eyeglass-type video display device capable of emitting scanning light in front of a user's face without being interfered by the user's face, while maintaining a compact size.

### Solution to Problem

An eyeglass-type video display device according to the present invention includes: an eyeglass body having a front frame, a lens attached to the front frame, and an arm extending backward from the end of the front frame; and a video generation device attached to the arm, wherein the video generation device includes: a substrate; a surface emitting laser element mounted on the substrate with the emission direction perpendicular to and facing up against the substrate; an MEMS optical deflector mounted on the substrate with a revolving mirror facing up against the substrate; a first mirror placed above the surface emitting laser element, with the MEMS optical deflector side and the surface emitting laser element side in the alignment direction between the surface emitting laser element and the MEMS optical deflector on the substrate as one end side and the other end side in the alignment direction, respectively, and reflecting light from the surface emitting laser element to the one end side in the alignment direction; and a second mirror arranged above the revolving mirror of the MEMS optical deflector and on the other end side in the alignment direction with respect to the revolving mirror, and irradiating the revolving mirror with incident light from the first mirror, and wherein the video generation device is attached to the inner side surface of the arm so that the scanning light emitted from the revolving mirror of the MEMS optical deflector irradiates the lens.

According to the eyeglass-type video display device of the present invention, in the video generation device, the second mirror is not arranged directly above the revolving mirror of the MEMS optical deflector on the substrate, but is arranged above and on the other side of the revolving mirror in the alignment direction. This allows the scanning light emitted from the video generation device to be emitted obliquely upward to the substrate, and to move toward the lens through the narrow gap between the arm and the user's face without any obstacle.

### Brief Description of Drawings

FIG. 1 is a perspective view of an eyeglass-type video display device.
FIG. 2A is a plan view of a video generation device.
FIG. 2B is a 2B arrow view of FIG. 2A.
FIG. 2C is a 2C arrow view of FIG. 2A.
FIG. 2D is a 2D arrow view of FIG. 2A.
FIG. 3 is a side view of a support frame.
FIG. 4 is a diagram illustrating a configuration in which a correction prism is attached on the inner surface side of a transparent part.
FIG. 5A is a diagram illustrating a scan area and an inscribed rectangular area viewed by a user with his/her eyes when light emitted from a video generation device attached to an eyeglass body is reflected by a reflection mirror for projection attached to the inner surface of a lens.
FIG. 5B is a comparison diagram illustrating a scan area and an inscribed rectangle area of a video generation device having a configuration different from the configuration of the video generation device in FIG. 5A.
FIG. 5C is a comparison diagram illustrating a scan area and an inscribed rectangle area of a video generation device having a configuration different from the configurations of the video generation devices in FIGS. 5A and 5B.
FIG. 6 is a plan view of a video generation device of a first mounting example.
FIG. 7A is a pattern diagram of a video generation device of a second mounting example.
FIG. 7B is a pattern diagram of a video generation device of a third mounting example.
FIG. 7C is a pattern diagram of a video generation device of a fourth mounting example.

### Description of Embodiments

With reference to the drawings, a plurality of preferable embodiments of the present invention will be described in detail. It goes without saying that the present invention is not limited to the following embodiments. The present invention encompasses various configurations other than the following embodiments within the scope of the technical concept of the present invention.

### (Eyeglass-type video display device)

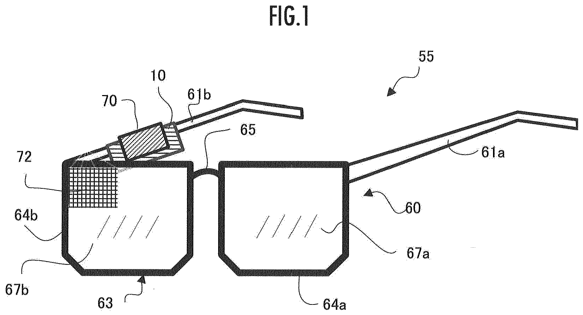

FIG. 1 is a perspective view of an eyeglass-type video display device 55. The eyeglass-type video display device 55 includes an eyeglass body 60 and a video generation device 10 detachably attached to the eyeglass body 60 with a clip 70.

The video generation device 10 is detachable from the eyeglass body 60, thereby ensuring freedom in the design of the eyeglass body 60, which is also an article of taste. It also enables the eyeglass body 60 to be changed.

The eyeglass body 60 has left and right arms 61a and 61b, and a front frame 63 which is connected to the front ends of the left and right arms 61a and 61b at the left and right ends. The front frame 63 further includes left and right lens frames 64a and 64b and a bridge 65 connecting the left and right lens frames 64a and 64b.

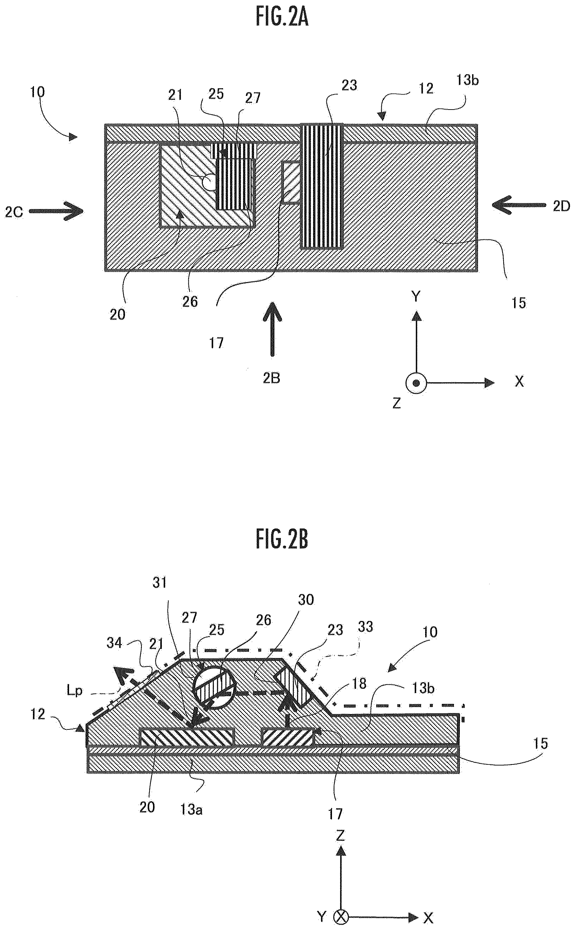

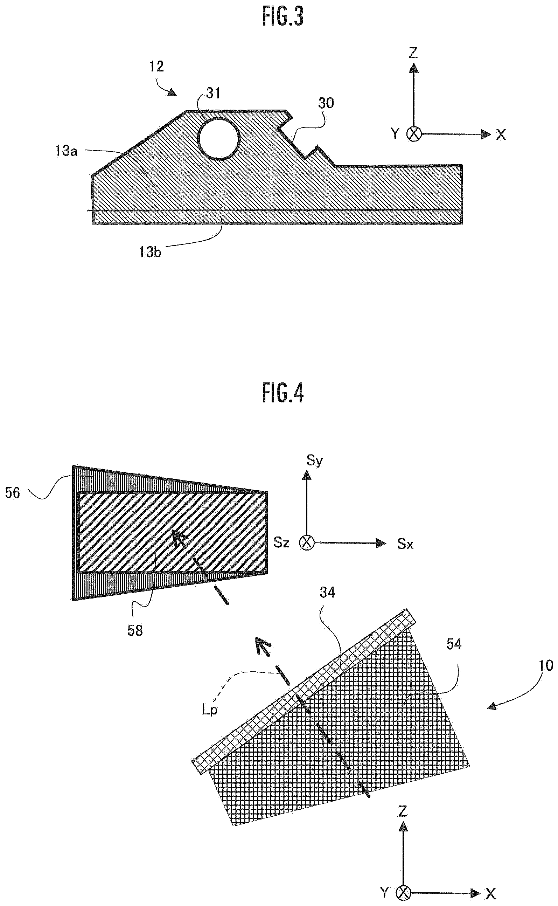

In FIG. 1, a numeral 72 indicates a scan area generated by light Lp (FIG. 2B), which is emitted from the video generation device 10 as scanning light, irradiating the inner surface side of the right lens 67b. The scan area 72 is described later (FIG. 4).

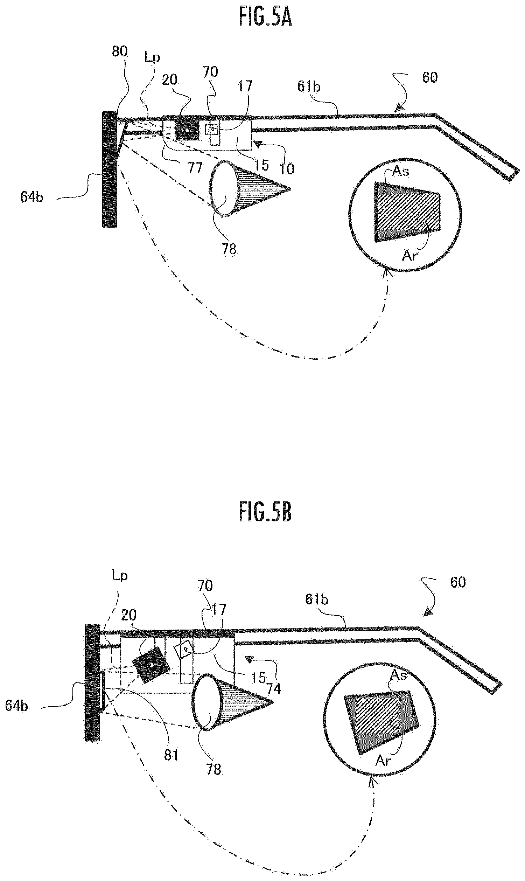

In FIG. 1, the inner surface of the lens 67b is used as a screen (translucent screen) and the image is generated on the screen in the scan area 72. As described with reference to FIG. 5A described later, however, it is also possible to form or attach a reflection mirror for projection 80, which is sufficiently smaller than the scan area 72 in FIG. 1, on or to the upper right corner of the inner surface of the lens 67b and to project images directly to the user's eye.

### (Video generation device/configuration)

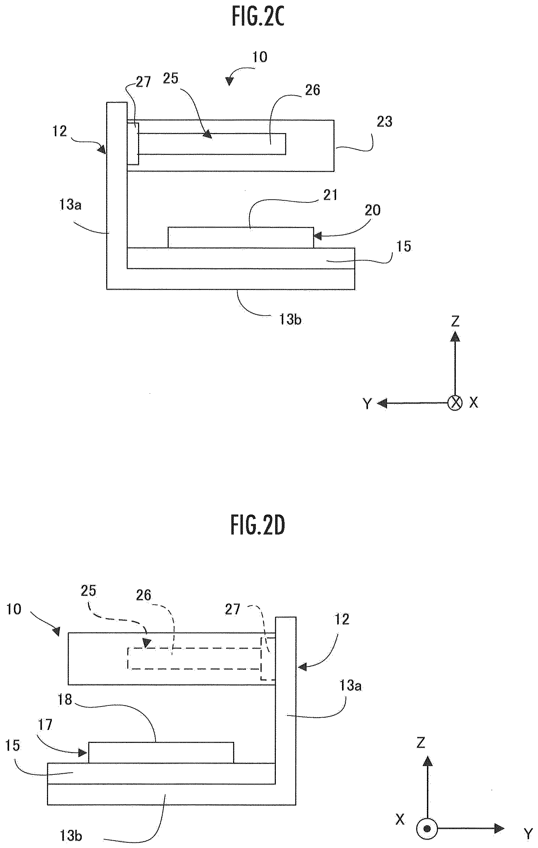

FIG. 2A is a plan view of the video generation device 10, FIG. 2B is a 2B arrow view of FIG. 2A, FIG. 2C is a 2C arrow view of FIG. 2A, and FIG. 2D is a 2D arrow view of FIG. 2A. Note that FIGS. 2A to 2D illustrate the video generation device 10 with a cover 33 (the one-dotted line in FIG. 2B) removed.

The video generation device 10 includes a support frame 12. The support frame 12 has an L-shaped cross-sectional profile and has a bottom plate 13a and an upright plate 13b that are vertically connected. The substrate 15 is rectangular, placed on the upper surface of the bottom plate 13a, and fixed to the bottom plate 13a.

For convenience of description, a three-axis Cartesian coordinate system is defined. The X-axis and Y-axis are defined as axes parallel to the longitudinal direction and the shortitudinal direction of the rectangular substrate 15, respectively. The Z-axis is defined as an axis parallel to the standing direction of the upright plate 13b from the substrate 15.

The VCSEL 17 and the MEMS optical deflector 20 are mounted on the upper surface of the substrate 15 with the X-axis direction as an alignment direction (the longitudinal direction of the substrate 15). The VCSEL 17 has an emission part 18 on the upper surface, and the laser beam from the emission part 18 is emitted perpendicularly to and facing up against the substrate 15, in other words, parallel to the Z-axis direction and upward. The MEMS optical deflector 20 has the mirror surface of the revolving mirror 21 facing upward in the Z-axis direction.

The MEMS optical deflector 20 is a two-dimensional scanning type MEMS optical deflector in this embodiment. Various configurations of MEMS optical deflectors are known. For example, the configuration is described in Japanese Patent Application Laid-Open No. 2017-207630 (two-dimensional scanning type MEMS optical deflector).

FIG. 3 is a side view of the support frame 12. Referring to FIGS. 2A to 2D and 3, the support frame 12, a planar mirror 23, and a rotating mirror 25 are described.

The upright plate 13b of the support frame 12 has a rectangular groove 30 and a through hole 31. The rectangular groove 30 has a rectangular shape opening upward and obliquely backward in the side profile of the upright plate 13b in the side view of FIG. 3, the rectangular groove 30 opens upward and obliquely backward in the side profile of the upright plate 13b, and the bottom surface of the rectangular groove 30 is formed by an inclined plane at an inclination angle of 45° to the substrate 15. The through hole 31 is formed as a cylindrical hole penetrating the upright plate 13b in the Y-axis direction.

In the X-axis direction, the center of the length (length in the side view) of the inclined plane of the rectangular groove 30 is located at the same position as the emission part 18 of the VCSEL 17. In the X-axis direction, the center line of the cylindrical hole of the through hole 31 is located behind the center of the revolving mirror 21. In the X-axis direction, the emission side of the light Lp from the video generation device 10 is referred to as the forward direction, and the opposite side to the emission side is referred to as the backward direction, as appropriate.

In the Z-axis direction, the center of the length of the inclined plane of the rectangular groove 30 and the center line of the cylindrical hole of the through hole 31 are located at the same position, that is, at the same height.

The planar mirror 23 is made of a rectangular plate-shaped member. Although the mirror surface as a plate surface on one side is not facing the emission part 18 of the VCSEL 17, the planar mirror 23 is bonded toward the emission part 18 in a cantilevered state at one end portion to the inclined surface portion of the rectangular groove 30 with an adhesive member such as resin. The thickness of the planar mirror 23 is set approximately equal to the depth of the rectangular groove 30.

The width (the length in the side view in FIG. 2B) of the planar mirror 23 is slightly shorter than the width (the length in the side view in FIG. 2B) of the rectangular groove 30. Therefore, before the adhesion of one end portion of the planar mirror 23 to the rectangular groove 30, that is, in a state before the fixation of the one end portion, the planar mirror 23 is able to be slightly displaced in the rectangular groove 30 in the direction of the slope of the bottom surface and to be slightly rotated about the axis line parallel to the Y axis. This displacement permits orientation adjustment of the mirror surface of the planar mirror 23 during manufacturing of the video generation device 10.

The rotating mirror 25 has a flat mirror part 26 and a cylindrical mating end portion 27 that is coupled to one end portion of the mirror part 26 and fitted into the through hole 31. The diameter of the cylinder of the mating end portion 27 is slightly smaller than the diameter of the cylinder of the through hole 31. Therefore, in a state before the mating end portion 27 is bonded with adhesive to the through hole 31, in other words, before the mating end portion 27 is fixed, the rotating mirror 25 is allowed not only to rotate around the center line of the through hole 31 while the mating end portion 27 is fitted into the through hole 31, but also to incline within a predetermined inclination angle range from a state in which the center line of the rotating mirror 25 is aligned with the center line of the through hole 31. Therefore, the rotational displacement is possible in a larger angular range than the angular range of the planar mirror 23. This rotatable and tiltable configuration allows the orientation of the mirror surface of the mirror part 26 to be adjusted during manufacturing of the video generation device 10. After the adjustment, the mating end portion 27 is fixed by bonding with an adhesive member such as resin.

It should be noted that, in the X-axis direction, the MEMS optical deflector 20 is not located directly below the rotating mirror 25, but located forward relative to the rotating mirror 25, in other words, on the opposite side from the VCSEL 17. As described later, this configuration contributes to the emission in which the light Lp from the video generation device 10 is emitted in the diagonally forward direction of the substrate 15, instead of perpendicularly to the substrate 15, regarding the emission direction. This configuration also ensures that the light Lp reaches the lens inner surface of the eyeglass body without interference from the user's face through a small gap between the video generation device and the user's face when the configuration is attached to the arm of the eyeglass body as a video scanning device of the eyeglass-type video display device.

The cover 33 (FIG. 2B) extends along the contour of the upright plate 13b, which is located in the upper part than the substrate 15, is placed over the upright plate 13b, and is adhered to the periphery of the bottom plate 13a at its bottom edge. The cover 33 is a transparent part 34 at least in the part where the light Lp described later is emitted from the video generation device 10 as scanning light.

### (Video generation device/action)

In FIG. 2B, the dashed line where the light Lp is drawn out indicates the optical path of the light Lp. The optical path of the light Lp starts from the emission part 18 of the VCSEL 17, passes through the planar mirror 23, the rotating mirror 25, and the revolving mirror 21 of the MEMS optical deflector 20, and then extends from the transparent part 34 of the cover 33 to the outside of the video generation device 10.

The optical path from the emission part 18 to the revolving mirror 21 is on one plane. In detail, the plane is perpendicular to the substrate 15 and also includes a straight line connecting the emission part 18 and the revolving mirror 21. The light Lp becomes scanning light by reflection on the revolving mirror 21 and is emitted obliquely upward relative to the substrate 15 from the transparent part 34 to the outside of the video generation device 10.

The light Lp as the emitted light from the VCSEL 17 is a laser beam weakened enough not to harm human eyes. Alternatively, the laser beam may be weakened to the extent that it does not harm human eyes by placing an optical member for light reduction such as an ND filter in the optical path.

The light Lp is emitted from the emission part 18 of the VCSEL 17 perpendicularly and upward (in the positive Z-axis direction) with respect to the substrate 15. When entering the planar mirror 23, the light Lp is reflected by the planar mirror 23 and the direction of the light Lp changes so as to be parallel to the X-axis as the alignment direction of the VCSEL 17 and the emission part 18 on the upper surface of the substrate 15 and on the negative side of the X-axis. Then, after advancing in parallel to the X-axis, the light Lp enters the mirror part 26 of the rotating mirror 25.

The inclination angle of the mirror part 26 to the substrate 15 is smaller than 45°. Therefore, the light Lp reflected on the mirror part 26 does not droop parallel to the Z-axis direction, in other words, the light Lp does not droop to the substrate 15 perpendicularly thereto, but the light Lp is directed to the center of the revolving mirror 21 of the MEMS optical deflector 20 obliquely toward one end side in the longitudinal direction of the substrate 15.

The revolving mirror 21 is revolving in two dimensions. Therefore, the light Lp having entered the revolving mirror 21 becomes the scanning light of the two-dimensional scan and rises obliquely from the revolving mirror 21 toward the one end side in the longitudinal direction.

The video generation device 10 is attached to the inner side surface of the arm 61b at a position where the emission direction of the light Lp emitted obliquely upward to the substrate 15 from the mirror part 26 becomes an obliquely forward direction with respect to an inner side surface of the arm 61b.

### (Correction prism)

FIG. 4 illustrates a configuration in which a correction prism 54 is attached on the inner surface side of the transparent part 34. Note that a numeral 56 indicates a scan area generated at an irradiation destination by the emitted light Lp as scanning light from the transparent part 34 of the video generation device 10 when the correction prism 54 is not used. The pre-correction scan area 56 is trapezoidal.

The scan area 72 is generated on the inner surface of the lens 67b on the right side as an irradiation destination by the emitted light Lp as scanning light from the transparent part 34 of the video generation device 10 when the correction prism 54 is attached to the inner surface of the transparent part 34. The correction prism 54 makes the scan area 72 rectangular even on the lens.

Note that, unlike the case where the eyeglass body 60 is equipped with the reflection mirror for projection 80 in FIG. 5A described later, the pre-correction scan area 56 and the scan area 72 are described here assuming these scan areas are generated on the inner surface of the right lens 67b, as illustrated in the scan area 72 in FIG. 1.

In detail, the scan area 72 is generated at the upper right corner of the inner surface of the right lens 67b as seen from the eyes of a user wearing the eyeglass body 60 of the eyeglass-type video display device 55 on his/her face, as illustrated in FIG. 1. In FIG. 5A described later, instead of generating the scan area 72 on the inner surface of the lens 67b and the user viewing the image in the scan area 72, there is provided an example that the reflection mirror for projection 80 is placed within the range of the scan area 72 and the reflection mirror for projection 80 is attached to the inner surface of the lens 67b. In the video generation device 10, either method may be used.

The revolving mirror 21 of the MEMS optical deflector 20 revolves resonantly and non-resonantly around the X-axis and the Y-axis, respectively. As a result, the light Lp emitted from the revolving mirror 21 becomes scanning light for two-dimensional scanning. The resonant and non-resonant frequencies are, for example, 14 kHz or higher and 60 Hz, respectively. The reciprocating revolving angle of the revolving mirror 21 around the X-axis is larger than the reciprocating revolving angle of the revolving mirror 21 around the Y-axis.

Thus, the pre-correction scan area 56 or the scan area 72 is generated at the upper right corner of the inner surface of the right lens 67b of the eyeglass body 60. In FIG. 4, the three-axis coordinate system of Sx, Sy, and Sz axes, which are different from the X, Y, and Z axes of the video generation device 10, are defined for the pre-correction scan area 56 and the scan area 72. The Sx and Sy axes correspond to the horizontal and vertical directions of the scan area 72 respectively, and to the left/right and up/down directions respectively from the eyes of a user wearing the eyeglass-type video display device 55 on his/her face.

FIG. 4 illustrates the shape of the scan area as seen from an eye 78 (FIG. 5A). In detail, the positive and negative sides of the Sx axis correspond to the right and left sides, respectively, viewed from the eye 78. The positive and negative sides of the Sy axis correspond to the upper and lower sides, respectively, viewed from the eye 78.

By reciprocating the revolving mirror 21 around the X axis in the video generation device 10, the light Lp scans back and forth in the Sx-axis direction in the pre-correction scan area 56 or the scan area 72. By reciprocating the revolving mirror 21 around the Y-axis in the video generation device 10, the light Lp scans back and forth in the Sy-axis direction in the pre-correction scan area 56 or the scan area 72.

When the correction prism 54 is not attached, the light Lp generates the pre-correction scan area 56 on the inner surface of the lens frame 64b. The pre-correction scan area 56 has a distorted shape with the vertical scan width increasing more to the left side viewed from the user wearing the eyeglass-type video display device 55. On the other hand, when the pre-correction scan area 56 is prepared, the light Lp generates the scan area 72 where the distortion is corrected on the inner surface of the right lens. The scan area 72 corresponds to the inscribed rectangle of the pre-correction scan area 56.

### (Comparison by emission direction)

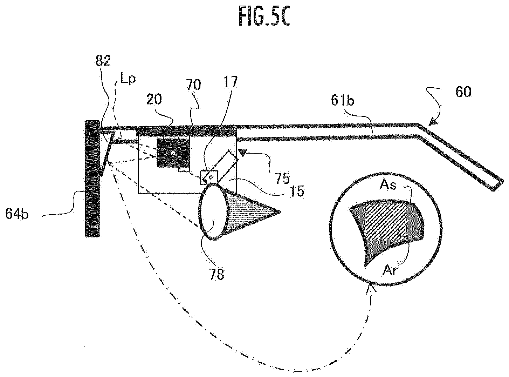

FIG. 5A illustrates a scan area As and an inscribed rectangular area Ar viewed by the user's eye 78 when the light Lp emitted from the video generation device 10 attached to the eyeglass body 60 is reflected by the reflection mirror for projection 80 attached to the inner surface of the lens 67b. FIGS. 5B and 5C are comparison diagrams with FIG. 5A, illustrating scan areas As and inscribed rectangle areas Ar viewed by a user with his/her eye 78 when the light Lp, which has been emitted from the video generation devices 74 and 75 having different configurations from the video generation device 10 respectively, is reflected by the reflection mirrors for projection 81 and 82 attached to the inner surface of the lens 67b.

In the description of FIG. 4 in the above, it has been described that the inner surface of the lens 67b is used as a screen and the scan area 72 is generated on the screen. In FIGS. 5A to 5C, instead of using the inner surface of the lens 67b as a screen, the reflection mirrors for projection 80, 81, and 82 are arranged on the inner surface side of the lens 67b corresponding to the scan area 72. This enables the light Lp image from the video generation device 10 to be directly recognized by the retina of the user's eye 78.

Although the light Lp is a laser beam, the reflectance values of the reflection mirrors for projection 80, 81, and 82 are set to values equal to or lower than a threshold value and the intensity of the light Lp is set very low. Therefore, the eye 78 is able to safely view the image by the light Lp reflected from the reflection mirrors for projection 80, 81, and 82. Even in the case where the reflection mirrors for projection 80, 81, and 82 are destroyed, a fail-safe function prevents the reflected light from entering the eye 78. Since the intensity of the light Lp does not exceed a predetermined intensity due to the weak current feeding to the VCSEL 17, the eye 78 is completely protected.

The reflection mirrors for projection 80, 81, and 82 are attached to the inner surface of the lens 67b by adhesion, or the lens 67b itself is manufactured in such a way that the areas of the reflection mirrors for projection 80, 81, and 82 are formed so as to function as mirrors.

In the video generation device 10 (an embodiment of the present invention) illustrated in FIG. 5A, the alignment direction of the VCSEL 17 and the MEMS optical deflector 20 on the substrate 15 (= the longitudinal direction of the substrate 15) is parallel to the extension direction of the arm 61b. In addition, the light Lp is emitted from one longitudinal-direction end side of the substrate 15 with being inclined with respect to the substrate 15. The inclination direction is a direction toward the inside of the lens 67b, in other words, a direction in which the light gradually moves away from the arm 61b in the left-right direction after the emission.

In the video generation device 10 in FIG. 5A, the vertical deflection angle of the light Lp is vertically at an equal angle to the horizontal line (a straight line parallel to the extension direction of the arm 61b). In other words, the center line of the vertical deflection angle of the light Lp emitted from the video generation device 10 is set to be horizontal (in the extension direction of the arm 61b). As a result, the scan area As is recognized by the eye 78 as being at the upper end portion of the lens 67b.

In the configurations of FIGS. 5A to 5C, the scan area As is recognized by the eye 78 with the scan in the reflection mirror for projection 80 by the light Lp emitted from the video generation device 10 in the case of no correction prism 54. The inscribed rectangular area Ar indicates the inscribed rectangle in the scan area As.

In FIG. 5A, the scan area As is a trapezoid whose left and right opposite sides, which face each other in the left-right direction, are parallel to each other. This left-right direction is recognized by the eye 78. The left side of the scan area As is longer than the right side since the left side of the scan area As receives the light Lp from the video generation device 10 at a larger angle of incidence (angle in the direction of incidence with respect to the normal) than the right side.

Since the image area provided to the user is set to be rectangular, in FIG. 5A, the inscribed rectangular area Ar is the maximum image area that is allowed to be provided.

In the video generation device 74 in FIG. 5B, the alignment direction of the VCSEL 17 and the MEMS optical deflector 20 is downward in the front side with respect to the extension direction of the arm 61b. As a result, the scan area As recognized by the eye 78 by scanning the reflection mirror for projection 81 by the light Lp emitted from the video generation device 74 is lower than the scan area As in FIG. 5A. Then, comparing the corresponding scan points between the scan area As in FIG. 5A and the scan area As in FIG. 5B, the angle of incidence of the light Lp to the scan area As is larger in FIG. 5B than in FIG. 5A. As a result, the scan area As in FIG. 5B is more distorted than the scan area As in FIG. 5A. Therefore, the inscribed rectangular area Ar in FIG. 5B is smaller than the inscribed rectangular area Ar in FIG. 5A.

In the video generation device 75 in FIG. 5C, the alignment direction of the VCSEL 17 and the MEMS optical deflector 20 are inclined so that the front end side faces up from the rear end side. As a result, the length in the shortitudinal direction of the substrate 15 in the side view of the arm 61b increases, and the video generation device 75 becomes larger.

By comparison between FIGS. 5A to 5C, the following knowledge is obtained for an advantageous configuration to minimize the substrate 15, in other words, to reduce the video generation device 10 in size, while maximizing the inscribed rectangular area Ar. Specifically, as illustrated in FIG. 5A, the alignment direction is made parallel to the extension direction of the arm 61b, and the VCSEL 17 and the MEMS optical deflector 20 are placed at a height such that the vertical deflection angle of the light Lp from the video generation device 10 is vertically equal to the horizontal line (a straight line parallel to the extension direction of the arm 61b).

In FIG. 5A, the bottom corner of the front end of the substrate 15 is chamfered with an R surface 77. People tend to become mentally unstable when an angular shape is present in the peripheral field of view near the eye 78. In the case of FIG. 5A, when a user views the upper side of the inscribed rectangular area Ar, the bottom corner of the front end of the substrate 15 enters the field of view, and therefore the chamfer of the R surface 77 is a measure to avoid this.

### (Arrangement of elements on substrate)

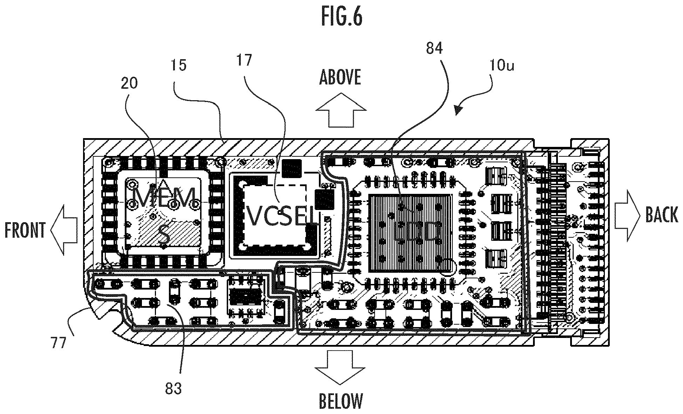

FIG. 6 is a plan view of the video generation device 10u. The plan view illustrates an arrangement example of a plurality of elements mounted on the substrate 15. The video generation device 10u is attached to the inner side surface of the arm 61b by aligning the longitudinal and shortitudinal directions of the rectangular substrate 15 with the extension direction and vertical direction of the arm 61b, respectively.

In detail, in the video generation device 10u, one end (the left end in FIG. 6) and the other end (the right end in FIG. 6) in the longitudinal direction are able to be aligned with the front end side and the rear end side of the arm 61b, respectively. In other words, the end on the side where the light Lp is emitted from the video generation device 10u is one end in the longitudinal direction of the substrate 15. Furthermore, in the video generation device 10u, one side (the upper side in FIG. 6) and the other side (the lower side in FIG. 6) in the shortitudinal direction are able to be aligned with the upper side and the lower side of the arm 61b, respectively.

The configurations of the respective optical scanning devices in FIG. 6 and subsequent figures are described by using the vertical and forward/backward directions of the optical scanning device in a state where the optical scanning device is attached to the arm 61b.

In the video generation device 10u, the substrate 15 has a chamfered R surface 77 at the lower end portion of the front end portion. As mentioned above, the R surface 77 is a measure to avoid destabilizing the user's psychology by the presence of an angular object in the field of view near the eye 78 of the user wearing the eyeglass-type video display device 55.

The MEMS optical deflector 20, the VCSEL 17, and the LDD 84 (laser driver) are mounted on the substrate 15 as relatively large elements, arrayed in that order from the front end towards the rear end. The LDD 84 is a laser drive unit that supplies drive current to drive the VCSEL 17.

The buffer amplifier 83 for an MEMS sensor (the area enclosed by double lines in FIG. 6) is composed of a plurality of relatively small components (for example, resistors and capacitors). Therefore, in the range occupied by the MEMS optical deflector 20 and the VCSEL 17 in the longitudinal direction of the substrate 15, the MEMS optical deflector 20 and the VCSEL 17 are arranged on the upper side as one side in the shortitudinal direction, and then the buffer amplifier 83 for the MEMS sensor is mounted in the lower area as the other side in the shortitudinal direction, which is generated by the arrangement of the MEMS optical deflector 20 and the VCSEL 17 on one side.

The buffer amplifier 83 for the MEMS sensor is a longitudinally elongated area. The buffer amplifier 83 for the MEMS sensor serves as an MEMS drive unit that supplies the drive voltage to the actuator of the MEMS optical deflector 20. The LDD 84 occupies the entire width in the shortitudinal direction of the substrate 15.

In this way, the mounting density of the elements in the video generation device 10u is able to be increased to reduce the video generation device 10u in size.

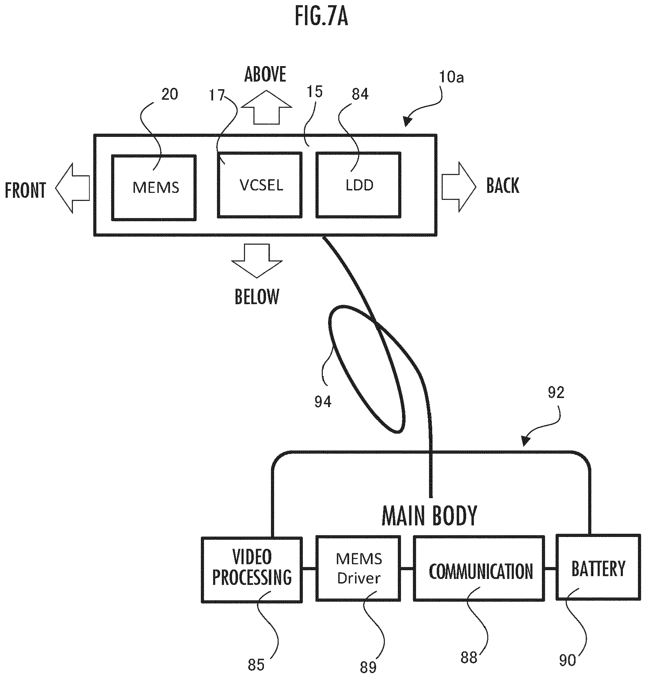

FIG. 7A is a configuration diagram of the video generation device 10a. Regarding the video generation device 10a, the MEMS optical deflector 20, the VCSEL 17, and the LDD 84 are mounted in a row in order from one end side to the other in the longitudinal direction on the substrate 15 of the video generation device 10a, which is connected to a main body 92 via a cable 94.

The main body 92 is allowed to be placed in a pocket of user's clothing, a bag, or the like. The main body 92 includes a video processing unit 85, an MEMS driver 89, a communication unit 88, and a battery 90. The communication unit 88 is connected to WIFI or the like, and receives video data from a server or the like on the Internet. The video processing unit 85 generates control signals to the LDD 84 so that the light Lp generates images corresponding to the video data by increasing or decreasing the luminance on the basis of the video data received by the communication unit 88, and outputs the control signals to the LDD 84 via the cable 94. The cable 94 includes a power supply line, and the electric power from the battery 90 is sent to the video generation device 10a via the cable 94.

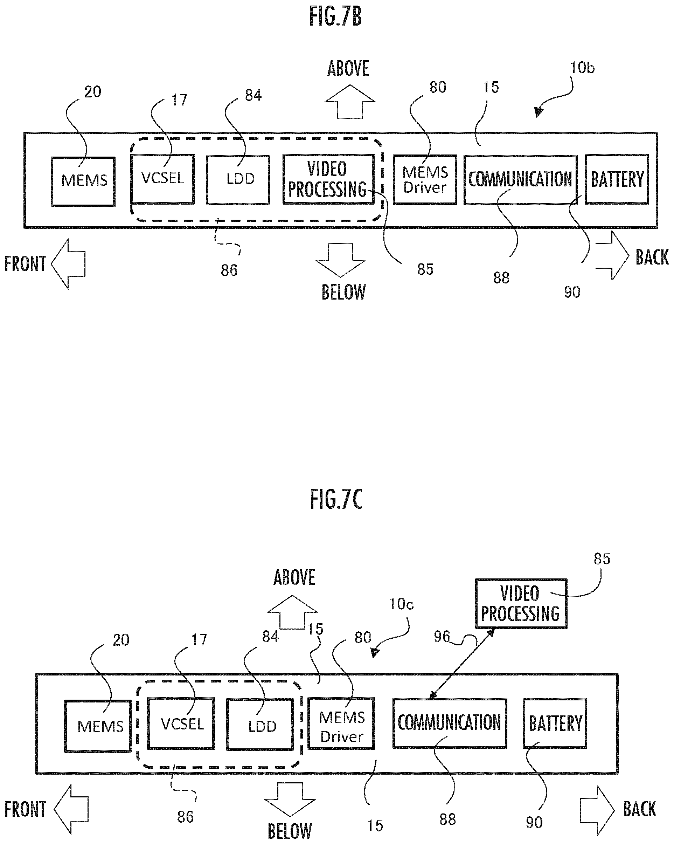

FIG. 7B is a pattern diagram of the video generation device 10b. In the video generation device 10b, the MEMS optical deflector 20, the VCSEL 17, the LDD 84, the video processing unit 85, the MEMS driver 89, the communication unit 88, and the battery 90 are mounted on the substrate 15 in a row in the order from the front end to the rear end. The VCSEL 17, the LDD 84, and the video processing unit 85 constitute a high-speed signal processing unit 86 in the video generation device 10b, and therefore are placed close to each other to reduce the wiring length on the substrate 15.

FIG. 7C is a pattern diagram of the video generation device 10c. In the video generation device 10c, the MEMS optical deflector 20, the VCSEL 17, the LDD 84, the MEMS driver 89, the communication unit 88, and the battery 90 are mounted on the substrate 15 in a row in the order from the front end to the rear end. The VCSEL 17 and the LDD 84 constitute the high-speed signal processing unit 86 in the video generation device 10c, and therefore are placed close to each other to reduce the length of the wiring on the substrate 15.

In FIG. 7C, the video processing unit 85 is deployed outside the video generation device 10c and is connected to the communication unit 88 of the video generation device 10c via radio 96. The video processing unit 85 is mounted on a server connected to the Internet, for example, and streams video data to the communication unit 88.

### (Variations)

The video generation device 10 is sometimes colloquially referred to as "smart glass." The video generation device 10 includes a VCSEL 17 as a surface emitting laser element. Instead of the VCSEL 17, other surface emitting laser elements, that is, surface emitting lasers other than those of the vertical cavity type, may be used.

The video generation device 10 includes a planar mirror 23 and a rotating mirror 25 as a first mirror and a second mirror, respectively. The first mirror and the second mirror are not limited to planar and rotating mirrors, but non-planar and non-rotating mirrors may be employed. The reason for the rotating type of the rotating mirror 25 is related to a fact that, during the manufacturing of the video generation device 10, in order to adjust the orientation (rotation angle) of the rotating mirror 25, the operator operates a predetermined jig to rotate the mirror part 26 of the rotating mirror 25, which is fitted into the through hole 31 within the through hole 31 having a rotor shape (for example, cylinder or truncated cone) of the upright plate 13b, so that the position is in the set position, while looking at the position of the test spot by the light Lp on the test screen.

The MEMS driver 89 drives the MEMS optical deflector 20 as an MEMS drive unit. The LDD 84 drives the VCSEL 17 as a laser drive unit. The specific circuit configurations of the MEMS drive unit and the laser drive unit are arbitrary as long as the MEMS drive unit and the laser drive unit each have a driving function.

In the eyeglass-type video display device 55, the video generation device 10 is attached to the arm 61b of the eyeglass body 60 via the clip 70. The video generation device 10 is able to be directly attached to the side surface of the arm 61b by adhesion or the like without using the clip 70 in the arm 61b. Furthermore, the clip may be fixed to the back side of the bottom plate 13a of the video generation device 10, or the clip may be molded in one piece and detachably attached to the arm 61b of the optional eyeglass body 60 with the clip. The detachable video generation device 10 is able to be configured to be attached to any ordinary eyeglasses on the market, instead of the special eyeglass body 60.

In FIG. 1, the video generation device 10 is attached to the inner side surface of the right arm 61b. The video generation device 10 may also be attached to the inner side surface of the left arm 61a. The video generation device 10 may also be attached to the inner side surfaces of both left and right arms 61a and 61b via the clip 70.

### (Effects of the embodiment)

The rotating mirror 25 (second mirror) is placed at a position closer to one end of the substrate 15 than the planar mirror 23 (first mirror) in the longitudinal direction of the substrate 15 and closer to the other end of the substrate 15 than the revolving mirror 21 of the MEMS optical deflector 20 and at the same height as the planar mirror 23, and the rotating mirror 25 reflects the reflected light from the planar mirror 23 toward the revolving mirror 21 of the MEMS optical deflector 20. Furthermore, the video generation device 10 is attached to the inner side surface of the arm 61b at a position where the emission direction of the light Lp (scanning light) emitted obliquely upward from the revolving mirror 21 to the substrate 15 is the obliquely forward direction in relation to the inner side surface of the arm 61b. This allows the light Lp emitted from the image generation device 10 to scan without hindrance to the scan destination in front of the user's eye 78 without interfering with the sides of the user's face.

The video generation device 10 is attached to the arm 61b so that the longitudinal direction is the same as the extension direction of the arm 61b. This allows a scan area to be generated in front of the user's eye 78 with less distortion.

The video generation device 10 is attached to the arm 61b at a position where the scan area generated by the light Lp at the scan destination has the opposite sides facing each other in the left-right direction of the eyeglass body 60 are parallel. This enables maximization of the inscribed rectangular area Ar as an inscribed rectangle able to be formed in the scan area and to be used as a video area.

The video generation device 10 includes a correction prism 54 that corrects the emission direction of the light Lp incident from the MEMS optical deflector 20 in the light Lp emission part, so that the scan area has a rectangular shape. This enables suppression of unnecessary scanning by the light Lp to increase power efficiency.

### Description of Reference Numerals

- 10: video generation device
- 15: substrate
- 17: VCSEL (surface emitting laser element)
- 18: emission part
- 20: MEMS optical deflector
- 21: revolving mirror
- 23: planar mirror (first mirror)
- 25: rotating mirror (second mirror)
- 54: correction prism
- 55: eyeglass-type video display device
- 56: pre-correction scan area
- 58: post-correction scan area
- 60: eyeglass body
- 61: arm
- 67: lens
- 72: scan area
- 77: R surface
- 80: reflection mirror for projection
- 83: buffer amplifier for MEMS sensor (MEMS drive unit)
- 84: LDD (laser drive unit)
- 85: video processing unit
- 86: high-speed signal processing unit
- 88: communication unit
- 94: cable
- 96: radio

## Claims

1. An eyeglass-type video display device comprising:
an eyeglass body having a front frame, a lens attached to the front frame, and
an arm extending backward from the end of the front frame; and
a video generation device attached to the arm,
wherein the video generation device includes:
a substrate;
a surface emitting laser element mounted on the substrate with the emission direction perpendicular to and facing up against the substrate;
an MEMS optical deflector mounted on the substrate with a revolving mirror facing up against the substrate;
a first mirror placed above the surface emitting laser element, with the MEMS optical deflector side and the surface emitting laser element side in the alignment direction between the surface emitting laser element and the MEMS optical deflector on the substrate as one end side and the other end side in the alignment direction, respectively, and reflecting light from the surface emitting laser element to the one end side in the alignment direction; and
a second mirror arranged above the revolving mirror of the MEMS optical deflector and on the other end side in the alignment direction with respect to the revolving mirror, and irradiating the revolving mirror with incident light from the first mirror, and
wherein the video generation device is attached to the inner side surface of the arm so that the scanning light emitted from the revolving mirror of the MEMS optical deflector irradiates the lens.

2. The eyeglass-type video display device according to claim 1, wherein the video generation device is attached to the arm so that the alignment direction is the same as the extension direction of the arm.

3. The eyeglass-type video display device according to claim 2, wherein the video generation device is attached to the arm at a position where the opposite sides facing each other in the left-right direction of the eyeglass body are parallel in the scan area generated at the scan destination of the scanning light.

4. The eyeglass-type video display device according to claim 3, wherein the video generation device includes a correction prism, at an emission part of the scanning light, that corrects the emission direction of the scanning light incident from the MEMS optical deflector so that the scan area is rectangular in shape.

5. The eyeglass-type video display device according to any one of claims 1 to 4, wherein:
the video generation device further includes a laser drive unit and an MEMS drive unit that drive the surface emitting laser element and the MEMS optical deflector, respectively;
the substrate has a rectangular shape with the alignment direction as the longitudinal direction;
the MEMS optical deflector, the surface emitting laser element, and the laser drive unit are mounted on the substrate in order from one end side to the other end side in the longitudinal direction; and
the MEMS optical deflector and the MEMS drive unit are mounted on the substrate on one side and the other side in the shortitudinal direction at one end portion in the longitudinal direction.

6. The eyeglass-type video display device according to claim 5, wherein the substrate has a chamfer at a corner on the other side in the shortitudinal direction at the one end portion in the longitudinal direction.

7. The eyeglass-type video display device according to any one of claims 1 to 4, wherein:
the substrate has a rectangular shape with the alignment direction as a longitudinal direction;
the image generation device further includes a laser drive unit that drives the surface emitting laser element, with the MEMS optical deflector, the surface emitting laser element, and the laser drive unit mounted on the substrate in order from one end side to the other end side in the longitudinal direction; and
the video generation device receives supply of drive voltage for driving the MEMS optical deflector and electric power from an external source via a cable.

8. The eyeglass-type video display device according to any one of claims 1 to 4, wherein:
the substrate has a rectangular shape with the alignment direction as a longitudinal direction;
the video generation device further includes a laser drive unit and an MEMS drive unit that drive the surface emitting laser element and the MEMS optical deflector, respectively, and a video processing unit that controls the relationship between the luminance of the surface emitting laser element and the emission direction of the scanning light emitted from the MEMS optical deflector based on video signals; and
the MEMS optical deflector, the surface emitting laser element, the laser drive unit, the video processing unit, and the MEMS drive unit are mounted on the substrate in order from one end side to the other end side in the longitudinal direction.

9. The eyeglass-type video display device according to any one of claims 1 to 4, wherein:
the substrate has a rectangular shape with the alignment direction as a longitudinal direction;
the video generation device further includes a laser drive unit and an MEMS drive unit that drive the surface emitting laser element and the MEMS optical deflector, respectively, a video processing unit that controls the relationship between the luminance of the surface emitting laser element and the emission direction of the scanning light emitted from the MEMS optical deflector, based on video signals, and a communication unit that wirelessly receives control signals that control the relationship between the luminance of the surface emitting laser element and the emission direction of the scanning light emitted from the MEMS optical deflector; and
the MEMS optical deflector, the surface emitting laser element, the laser drive unit, the MEMS drive unit, and the communication unit are mounted on the substrate in order from one end side to the other end side in the longitudinal direction.

## Amended claims

### Amended claims under Art. 19.1 PCT

1. An eyeglass-type video display device comprising:
an eyeglass body having a front frame, a lens attached to the front frame, and
an arm extending backward from the end of the front frame; and
a video generation device attached to the arm,
wherein the video generation device includes:
a substrate;
a surface emitting laser element mounted on the substrate with the emission direction perpendicular to and facing up against the substrate;
an MEMS optical deflector mounted on the substrate with a revolving mirror facing up against the substrate;
a first mirror placed above the surface emitting laser element, with the MEMS optical deflector side and the surface emitting laser element side in the alignment direction between the surface emitting laser element and the MEMS optical deflector on the substrate as one end side and the other end side in the alignment direction, respectively, and reflecting light from the surface emitting laser element to the one end side in the alignment direction; and
a second mirror arranged above the revolving mirror of the MEMS optical deflector and on the other end side in the alignment direction with respect to the revolving mirror, and irradiating the revolving mirror with incident light from the first mirror, and
wherein the video generation device is attached to the inner side surface of the arm so that the alignment direction is the same as the extension direction of the arm, the scanning light emitted from the revolving mirror of the MEMS optical deflector irradiates the lens, and a scan area is generated at a scan destination of the scanning light at the upper corner on the arm side of the lens, and at a position where the opposite sides facing each other in the left-right direction of the eyeglass body are parallel in the scan area.

2. The eyeglass-type video display device according to claim 1, wherein the video generation device includes a correction prism, at an emission part of the scanning light, that corrects the emission direction of the scanning light incident from the MEMS optical deflector so that the scan area is rectangular in shape.

3. The eyeglass-type video display device according to claim 1 or 2, wherein:
the video generation device further includes a laser drive unit and an MEMS drive unit that drive the surface emitting laser element and the MEMS optical deflector, respectively;
the substrate has a rectangular shape with the alignment direction as the longitudinal direction;
the MEMS optical deflector, the surface emitting laser element, and the laser drive unit are mounted on the substrate in order from one end side to the other end side in the longitudinal direction; and
the MEMS optical deflector and the MEMS drive unit are mounted on the substrate on one side and the other side in the shortitudinal direction at one end portion in the longitudinal direction.

4. The eyeglass-type video display device according to claim 1, 4 or 3, wherein:
the substrate has a rectangular shape with the alignment direction as a longitudinal direction;
the image generation device further includes a laser drive unit that drives the surface emitting laser element, with the MEMS optical deflector, the surface emitting laser element, and the laser drive unit mounted on the substrate in order from one end side to the other end side in the longitudinal direction; and
the video generation device receives supply of drive voltage for driving the MEMS optical deflector and electric power from an external source via a cable.

5. The eyeglass-type video display device according to claim 1, 2, 3 or 4, wherein:
the substrate has a rectangular shape with the alignment direction as a longitudinal direction;
the video generation device further includes a laser drive unit and an MEMS drive unit that drive the surface emitting laser element and the MEMS optical deflector, respectively, and a video processing unit that controls the relationship between the luminance of the surface emitting laser element and the emission direction of the scanning light emitted from the MEMS optical deflector based on video signals; and
the MEMS optical deflector, the surface emitting laser element, the laser drive unit, the video processing unit, and the MEMS drive unit are mounted on the substrate in order from one end side to the other end side in the longitudinal direction.

6. The eyeglass-type video display device according to 1, 2, 3, 4 or 5, wherein:
the substrate has a rectangular shape with the alignment direction as a longitudinal direction;
the video generation device further includes a laser drive unit and an MEMS drive unit that drive the surface emitting laser element and the MEMS optical deflector, respectively, a video processing unit that controls the relationship between the luminance of the surface emitting laser element and the emission direction of the scanning light emitted from the MEMS optical deflector, based on video signals, and a communication unit that wirelessly receives control signals that control the relationship between the luminance of the surface emitting laser element and the emission direction of the scanning light emitted from the MEMS optical deflector; and
the MEMS optical deflector, the surface emitting laser element, the laser drive unit, the MEMS drive unit, and the communication unit are mounted on the substrate in order from one end side to the other end side in the longitudinal direction.

7. The eyeglass-type video display device according to claim 1, wherein the vertical deflection angle of the scanning light emitted from the revolving mirror is set so that the upper and lower angles are equal to each other with respect to the horizontal line of the scan area.

8. The eyeglass-type video display device according to claim 1 or 7, wherein a reflection mirror for projection is provided in the scan area for backward reflection by the reflection mirror for projection.

9. The eyeglass-type video display device according to claim 8, wherein the reflection mirror for projection is either a separate projection reflection mirror attached with adhesion to the inner surface of the lens, or a reflection mirror for projection formed into the lens itself.

## Amended claims

### Amended claims under Art. 19.1 PCT

1. An eyeglass-type video display device comprising:
an eyeglass body having a front frame, a lens attached to the front frame, and
an arm extending backward from the end of the front frame; and
a video generation device attached to the arm,
wherein the video generation device includes:
a substrate;
a surface emitting laser element mounted on the substrate with the emission direction perpendicular to and facing up against the substrate;
an MEMS optical deflector mounted on the substrate with a revolving mirror facing up against the substrate;
a first mirror placed above the surface emitting laser element, with the MEMS optical deflector side and the surface emitting laser element side in the alignment direction between the surface emitting laser element and the MEMS optical deflector on the substrate as one end side and the other end side in the alignment direction, respectively, and reflecting light from the surface emitting laser element to the one end side in the alignment direction; and
a second mirror arranged above the revolving mirror of the MEMS optical deflector and on the other end side in the alignment direction with respect to the revolving mirror, and irradiating the revolving mirror with incident light from the first mirror, and
wherein the video generation device is attached to the inner side surface of the arm so that the alignment direction is the same as the extension direction of the arm, the scanning light emitted from the revolving mirror of the MEMS optical deflector irradiates the lens, and a scan area is generated at a scan destination of the scanning light at the upper corner on the arm side of the lens, and at a position where the opposite sides facing each other in the left-right direction of the eyeglass body are parallel in the scan area.

2. The eyeglass-type video display device according to claim 1, wherein the video generation device includes a correction prism, at an emission part of the scanning light, that corrects the emission direction of the scanning light incident from the MEMS optical deflector so that the scan area is rectangular in shape.

3. The eyeglass-type video display device according to claim 1 or 2, wherein:
the video generation device further includes a laser drive unit and an MEMS drive unit that drive the surface emitting laser element and the MEMS optical deflector, respectively;
the substrate has a rectangular shape with the alignment direction as the longitudinal direction;
the MEMS optical deflector, the surface emitting laser element, and the laser drive unit are mounted on the substrate in order from one end side to the other end side in the longitudinal direction; and
the MEMS optical deflector and the MEMS drive unit are mounted on the substrate on one side and the other side in the shortitudinal direction at one end portion in the longitudinal direction.

4. The eyeglass-type video display device according to claim 1, 2 or 3, wherein:
the substrate has a rectangular shape with the alignment direction as a longitudinal direction;
the image generation device further includes a laser drive unit that drives the surface emitting laser element, with the MEMS optical deflector, the surface emitting laser element, and the laser drive unit mounted on the substrate in order from one end side to the other end side in the longitudinal direction; and
the video generation device receives supply of drive voltage for driving the MEMS optical deflector and electric power from an external source via a cable.

5. The eyeglass-type video display device according to claim 1, 2, 3 or 4, wherein:
the substrate has a rectangular shape with the alignment direction as a longitudinal direction;
the video generation device further includes a laser drive unit and an MEMS drive unit that drive the surface emitting laser element and the MEMS optical deflector, respectively, and a video processing unit that controls the relationship between the luminance of the surface emitting laser element and the emission direction of the scanning light emitted from the MEMS optical deflector based on video signals; and
the MEMS optical deflector, the surface emitting laser element, the laser drive unit, the video processing unit, and the MEMS drive unit are mounted on the substrate in order from one end side to the other end side in the longitudinal direction.

6. The eyeglass-type video display device according to 1, 2, 3, 4 or 5, wherein:
the substrate has a rectangular shape with the alignment direction as a longitudinal direction;
the video generation device further includes a laser drive unit and an MEMS drive unit that drive the surface emitting laser element and the MEMS optical deflector, respectively, a video processing unit that controls the relationship between the luminance of the surface emitting laser element and the emission direction of the scanning light emitted from the MEMS optical deflector, based on video signals, and a communication unit that wirelessly receives control signals that control the relationship between the luminance of the surface emitting laser element and the emission direction of the scanning light emitted from the MEMS optical deflector; and
the MEMS optical deflector, the surface emitting laser element, the laser drive unit, the MEMS drive unit, and the communication unit are mounted on the substrate in order from one end side to the other end side in the longitudinal direction.

7. The eyeglass-type video display device according to claim 1, wherein the vertical deflection angle of the scanning light emitted from the revolving mirror is set so that the upper and lower angles are equal to each other with respect to the horizontal line of the scan area.

8. The eyeglass-type video display device according to claim 1 or 7, wherein a reflection mirror for projection is provided in the scan area for backward reflection by the reflection mirror for projection.

9. The eyeglass-type video display device according to claim 8, wherein the reflection mirror for projection is either a separate projection reflection mirror attached with adhesion to the inner surface of the lens, or a reflection mirror for projection formed into the lens itself.

Statement under Art. 19.1 PCT
The amended claim 1 is an amendment of original claim 1 that recites "the video generation device is attached to the inner side surface of the arm so that the scanning light emitted from the revolving mirror of the MEMS optical deflector irradiates the lens" to "the video generation device is attached to the inner side surface of the arm so that the alignment direction is the same as the extension direction of the arm, the scanning light emitted from the revolving mirror of the MEMS optical deflector irradiates the lens, and a scan area is generated at a scan destination of the scanning light at the upper corner on the arm side of the lens, and at a position where the opposite sides facing each other in the left-right direction of the eyeglass body are parallel in the scan area."

This amendment of claim 1 is based on the matters described in claims 2 and 3 and in paragraph [0043] of the specification of the application.

Claims 2, 3, and 6 have been canceled.

In the amended claim 8, "the the" in original claim 8 is amended to "the."

The amendment of claim 8 is an amendment of a clerical error.

In the amended claim 9, "the the" (two places) in original claim 9 is amended to "the" and "includes includes" is amended to "includes."

The amendment of claim 9 is an amendment of a clerical error.

Claim 10 is an additional claim.

The amendment of claim 10 is based on the matters described in paragraph [0052] and FIG. 5A of the specification of the application.

Claim 11 is an additional claim.

The amendment of claim 11 is based on the matters described in paragraph [0047] and FIG. 5A of the specification of the application.

Claim 12 is an additional claim.

The amendment of claim 12 is based on the matters described in paragraph [0050] of the specification of the application.
